(19)

Europäisches
Patentamt
European
Patent Office
Office européen
des brevets

(11)     **EP 1 707 958 B1**

(12)                **EUROPEAN PATENT SPECIFICATION**

(45) Date of publication and mention
of the grant of the patent:
**19.01.2011   Bulletin 2011/03**

(51) Int Cl.:
*G01N 30/32* *(2006.01)*      *G01N 30/34* *(2006.01)*

(21) Application number: **05102533.6**

(22) Date of filing: **31.03.2005**

(54) **Device and method for solvent supply with correction of piston movement**

Vorrichtung und Verfahren zur Bereitstellung von Lösungsmitteln mit Korrektur der Kolbenbewegung

Dispositif et procédé pour fournir un solvant avec correction du mouvement du piston

(84) Designated Contracting States:
**DE FR GB**

(43) Date of publication of application:
**04.10.2006   Bulletin 2006/40**

(73) Proprietor: **Agilent Technologies, Inc.**
**Santa Clara CA 95051 (US)**

(72) Inventors:
• **Witt, Klaus**
**75210, Keltern (DE)**
• **Choikhet, Konstantin**
**76228, Karlsruhe (DE)**
• **Bierbaum, Alexander**
**76133, Karlsruhe (DE)**

(74) Representative: **Barth, Daniel Mathias et al**
**Agilent Technologies Deutschland GmbH**
**Patentabteilung**
**Herrenberger Strasse 130**
**71034 Böblingen (DE)**

(56) References cited:
**EP-A- 0 309 596       EP-A1- 1 707 958**
**WO-A-03/079000       US-A- 4 225 290**
**US-A- 5 450 743       US-A1- 2003 052 007**

• **ZHOU X ET AL: "New micro-flow pumping system
for liquid chromatography" JOURNAL OF
CHROMATOGRAPHY, ELSEVIER SCIENCE
PUBLISHERS B.V. AMSTERDAM, NL, vol. 913, no.
1-2, 13 April 2001 (2001-04-13), pages 165-171,
XP004232780 ISSN: 0021-9673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND ART

The present invention relates to supplying a solvent.

Solvent delivery systems are used to source single-component liquids or mixtures of liquids at pressures which can range from substantially atmospheric pressure to pressures on the order of several hundred bar.

In US 2004/0108273 A1, titled "Backflow Prevention for High Pressure Gradient Systems", a high pressure gradient solvent delivery system is described. The compositional accuracy of high pressure gradient pumps is improved by adding pulse dampening with backflow prevention to each high pressure pump. The backflow prevention adds sufficient minimum flow resistance whereby enhancing the performance of the pulse dampening over a wider range of flow rates resulting in consistent gradient performance.

US 4,225,290 A and EP 0309596 A1 relate to compensation of pulsations. The teaching thereof forms the preamble to claim 1.

DISCLOSURE OF THE INVENTION

It is an object of the invention to improve the precision of a solvent supply system. The object is solved by the independent claim(s). Preferred embodiments are shown by the dependent claim(s).

According to the present invention, a supply flow path for supplying a solvent comprises a metering device with a piston, whereby the metering device is adapted for metering the solvent. The supply flow path further comprises a control unit adapted for controlling the metering device's piston movement in accordance with solvent pressure, wherein a variation of the solvent pressure gives a rise to a corresponding variation of a solvent volume contained in the supply flow path or a part thereof. The control unit is adapted for compensating for the variation of the solvent volume by a corresponding corrective movement of the piston.

Pressure variations at the outlet of the supply flow path affect the solvent volume stored in the supply flow path. For example, if the solvent pressure rises, the solvent volume in the supply flow path will be compressed. If there is a pressure drop, an expansion of the solvent volume in the supply flow path will be observed. Because of these volumetric changes introduced by pressure variations, there is no one-to-one correspondence between the solvent volume displaced by the piston and the flow rate of solvent at the outlet of the supply flow path. In fact, the flow rate at the outlet does not only depend on the piston movement, but also depends on the instantaneous solvent pressure. The absolute value of volumetric changes introduced by pressure variations is dependent on the total volume of liquid in the supply flow path and its elasticity, so the relative disturbance on the flow rate at the outlet rises when the flow rate is low. Additionally systematic pressure slopes might e.g. arise from steep gradients that are used especially in high throughput applications.

According to the present invention, the control unit is adapted for controlling the piston movement in a way that effects due to pressure variations are taken into account. First, the piston's velocity is set to a desired flow rate and the solvent pressure is monitored. In case of pressure variations, a corrective movement that corresponds to the pressure-induced variation of the solvent volume in the supply flow path is superposed on the regular piston movement. Thus, the expansion or compression of the solvent volume contained in the supply flow path is compensated for. As a result, a solvent flow having the desired flow rate is obtained at the outlet of the supply flow path.

In a lot of applications, it is not possible to keep system pressure at a constant value. But even if system pressure is subjected to pressure variations, the supply flow path according to embodiments of the present invention will deliver a highly accurate solvent flow.

According to a preferred embodiment, the supply flow path comprises a pressure determination unit adapted for tracking solvent pressure in the supply flow path. For example, the pressure determination unit might generate a signal indicating the actual pressure, and said signal might be forwarded to the metering device's control unit, in order to adapt the piston movement to the pressure variation.

In a preferred embodiment, the control unit is adapted for superposing a correction on the piston movement, in order to stabilize the flow rate at the outlet of the supply flow path. Thus, distortions and discontinuities of the flow rate are removed. For example, in the field of sample analysis, a stabile flow rate helps to improve the accuracy of the acquired measurement data.

In a preferred embodiment, the control unit is adapted for compensating for an additional compression or expansion flow due to the variation of the solvent pressure by modifying the metering device's piston movement, whereby an additional solvent quantity pushed into or drawn out of the supply flow path is compensated for. Such compression or expansion flow might e.g. include the effects of solvent compressibility and system elasticity. System elasticity might e.g. include damping elements.

The control unit is adapted for compensating for an increase of the solvent pressure by superposing a corresponding forward displacement on the piston movement. The control unit is further adapted for compensating for a decrease of the solvent pressure by superposing a corresponding backward displacement on the piston movement. A forward displacement of the piston corresponds to a volume compression of the solvent in the supply flow path. Correspondingly, a backward displacement of the piston corresponds to a volume expansion of the solvent in the supply flow path.

Embodiments of the present invention further relate to a solvent supply system comprising a first supply flow path as described above, with the first supply flow path being adapted for supplying a first solvent to a mixing unit. The solvent supply system further comprises a second supply flow path comprising a second metering device with a piston, the second supply flow path being adapted for supplying a second solvent to the mixing unit. The mixing unit is adapted for mixing the first and the second solvent and for supplying a composite solvent with a mixing ratio of the first and the second solvent. The control unit is adapted for such controlling the piston movements of the first and the second metering device that the mixing ratio becomes substantially independent of a variation of the solvent pressure of the composite solvent.

In prior art solutions, a variation of solvent pressure at the mixing unit's outlet affected the flow rates provided by the first and the second supply flow path. For example, in case of a pressure increase, both the first solvent stored in the first supply flow path and the second solvent stored in the second supply flow path have been subjected to further compression. As a result, the pressure change affected the effective flow rates provided by the first and the second supply flow path.

Furthermore, variations of the composite solvent's pressure may affect the mixing ratio of the first and the second solvent. The flow rate provided by the first supply flow path might differ significantly from the flow rate provided by the second supply flow path. Furthermore, the compressibility in the first supply flow path might differ from the compressibility in the second supply flow path. For these reasons, the volumetric effects caused by the pressure variations might affect the respective flow rates to a different extent, and hence, a pressure variation may affect the solvents' mixing ratio.

In prior art solvent supply systems, the above-described pressure dependence of the composite solvent's mixing ratio had a negative effect on the precision of acquired data. Furthermore, for certain parameter ranges, oscillations of system pressure have been encountered. The reason for these oscillations is that system pressure affects the solvents' mixing ratio, and in turn, the mixing ratio affects system pressure through viscosity changes of such mixed liquids.

In the solvent supply system according to embodiments of the present invention, the volumetric effects due to pressure variations are compensated for. Because of these volumetric effects, there is no one-to-one correspondence between the piston's velocity and the flow rate obtained at a supply flow path's outlet. Accordingly, in embodiments of this invention, the piston movement is such modified that both the desired flow rate and the effects due to pressure variations are taken into account. Any additional compression or expansion of the solvent contained in the supply flow path is compensated for. By utilizing a pressure-corrected piston movement, the mixing ratio becomes substantially independent of any variations of the composite solvent's pressure. The percentage of the first and the second solvent is no longer affected by pressure variations, and hence, a composite solvent having a highly precise solvent composition is provided at the mixing unit's outlet. By stabilizing the composite solvent's mixing ratio, the accuracy of subsequent measurements is improved.

According to a preferred embodiment, the control unit is adapted for compensating for an additional compression or expansion flow due to the variation of the solvent pressure. This can be accomplished by such modifying the metering devices' piston movements, in each of the first and the second supply flow path, that solvent quantities pushed into or drawn out of the respective supply flow path are compensated for.

In a preferred embodiment, the control unit is adapted for counteracting an expansion or compression of the solvent volumes in the supply flow paths, which is due to a variation of the solvent pressure, by compensatory movements superposed on the piston movements.

According to another preferred embodiment, the control unit is adapted for compensating for an increase of the solvent pressure by superposing corresponding forward displacements on the piston movements. Further preferably, the control unit is adapted for compensating for a decrease of the solvent pressure by superposing corresponding backward displacements on the piston movements.

In a preferred embodiment, forward displacements of the pistons correspond to volume compressions of the first and the second solvent in the first and the second supply flow path, and backward displacements of the pistons correspond to volume expansions of the first and the second solvent in the first and the second supply flow path.

According to an alternative embodiment, the control unit is adapted for dampening or suppressing oscillations of the composite solvent's mixing ratio, which are caused by pressure variations, by superposing a compensatory stimulus pulse on at least one of the piston movements of the first and the second metering device.

In solvent supply systems of the prior art, a change of the composite solvent's pressure affects both the volume of solvent A contained in the first supply flow path and the volume of solvent B in the second supply flow path. In dependence on the flow rates and on the compressibilities in the two supply flow paths, the mixing ratio of solvent A and solvent B might be modified. In turn, the modified mixing ratio might affect the composite solvent's viscosity and thus the pressure. Thus, the interplay between mixing ratio and solvent pressure gives rise to oscillations of the mixing ratio and to corresponding oscillations of solvent pressure.

According to embodiments of the present invention, this oscillatory behaviour is counteracted by superposing corrective displacements on the piston movements. In the embodiments that have been described so far, these corrections are steadily applied right from the beginning. However, for suppressing the undesired oscillatory behaviour, it might be sufficient to superpose a short correction pulse on at least one of the first and the second metering device's piston movement. In response to this stimulus pulse, the oscillations are suppressed almost immediately. In this embodiment, the overhead required for performing the correction is kept as small as possible.

According to a preferred embodiment, the mixing unit is implemented as a mixing tee. In the mixing tee, the flow of solvent A is merged with the flow of solvent B, with the mixture of solvent A and solvent B being provided at the mixing tee's outlet.

According to another preferred embodiment, the solvent supply system further comprises a pressure determination unit adapted for determining the pressure of the solvent behind the mixing unit. The composite solvent's pressure may vary in dependence on solvent composition. By monitoring the pressure variation, the required corrective movements for the pistons can be determined.

According to yet another embodiment, the piston movements of the first and the second flow path are such controlled that the composite solvent is supplied at a constant flow rate. For example, in the field of analysing fluid samples, analysis of acquired data is considerably simplified when the composite solvent's flow rate is kept constant.

In a preferred embodiment, the mixing ratio of the first and the second solvent changes as a function of time. Thus, the properties of the composite solvent may vary as a function of time, e.g. in a programmed manner.

In a further preferred embodiment, the control unit is adapted for such controlling the piston movements of the first and the second metering device that the ratio of the first and the second solvent is continuously varied. According to a further preferred embodiment, the ratio of the first and the second solvent is varied according to a gradient. For example, analytical conditions might require the mobile phase composition to change over the course of the analysis. For example, in liquid chromatography, the elution strength of the mobile phase often is programmed to increase continuously as a function of time.

According to another preferred embodiment, the required correction of the piston movement is derived from one or more of the following parameters: actual pressure of the individual solvents or the composite solvent, system elasticity (damping) of the supply flow path components, respective compressibilities in the first and the second supply flow path, actual piston positions of the metering devices. From a metering device's piston position, the solvent volume contained in the respective supply flow path can be determined. As soon as the pressure variation, the system elasticity, the compressibility in a supply flow path and the solvent volume stored in the supply flow path are known, the resulting compression or expansion of the solvent volume can be derived there from. The change of solvent volume determines the required compensatory displacement of the piston.

In a preferred embodiment, respective compressibilities in the first and the second supply flow path are determined before delivering the composite solvent. For example, a compressibility in a supply flow path might be determined by monitoring the solvent pressure while compressing the solvent volume stored in the supply flow path, preferably by the action of displacing the piston.

In a preferred embodiment, the variation of the composite solvent's pressure is due to a corresponding variation of the composite solvent's viscosity. For example, the mixing unit's outlet might be connected to a device having a certain hydraulic resistance. The composite solvent's pressure required for passing composite solvent through the device depends both on the device's hydraulic resistance and on the composite solvent's viscosity. In turn, the composite solvent's viscosity might depend on the mixing ratio of the first and the second solvent. Hence, the mixing ratio affects the viscosity, whereby a variation of the composite solvent's viscosity leads to a corresponding variation of solvent pressure at the mixing unit's outlet.

According to a preferred embodiment, the control unit is adapted for deriving the composite solvent's pressure from a known relation between solvent pressure and solvent composition. For example, solvent pressure might be recorded as a function of the mixing ratio of the first and the second solvent. As soon as the relation between solvent pressure and mixing ratio is known, this relation can be used for forecasting the pressure of the composite solvent at the mixing unit's outlet. In this embodiment, it is no longer necessary to actually measure the composite solvent's pressure.

In a further preferred embodiment, at least one of the first and the second supply flow path comprises a damping unit. A damping unit is adapted for flattening out discontinuities of system pressure. For example, the damping unit might comprise a fluid reservoir that is separated from the supply flow path by means of an elastic membrane.

According to a preferred embodiment, the solvent supply system is part of a microfluidic device.

According to a preferred embodiment, the solvent supply system is in fluid connection with a separation device, with the composite solvent being used as a mobile phase, in order to separate compounds of a fluid sample. For example, the mobile phase might be conveyed through the fluid passageways of a stationary phase support where separation of dissolved analytes can occur. The stationary phase support may e.g. comprise a packed bed of particles, a membrane or collection of membranes, a porous monolithic bed, or an open tube. Often, analytical conditions require the mobile phase composition to change over the course of the analysis, in order to perform a gradient elution. In applications of this kind, measurement accuracy highly depends on the metering precision of the solvent supply system. For example, measurement accuracy might depend on the precision of the first and the second solvent's mixing ratio, because this mixing ratio determines properties such as e.g. the composite solvent's elution strength.

In a preferred embodiment, water is used as a first solvent, whereas an organic solvent such as e.g. ethanol or acetonitrile is used as a second solvent. By continuously increasing the amount of organic solvent, the composite solvent's elution strength is continuously increased as a function of time.

A separation system according to embodiments of the present invention comprises a solvent supply system as described above, the solvent supply system being adapted for supplying a composite solvent, and a separation device adapted for separating compounds of a fluid sample, with the outlet of the solvent supply system being connected to the inlet of the separation device. By utilizing a solvent supply system that is capable of providing a highly precise solvent gradient, the accuracy of the acquired data is considerably improved. In a preferred embodiment, the separation device is a separation column filled with packing material.

In a preferred embodiment, the separation flow path comprises a sample injection unit that is preferably located downstream of the solvent supply system and upstream of the separation device.

In a further preferred embodiment, the separation system is one of: a liquid chromatography system, an electrophoresis system, an electrochromatography system.

Embodiments of the invention can be partly or entirely embodied or supported by one or more suitable software programs, which can be stored on or otherwise provided by any kind of data carrier, and which might be executed in or by any suitable data processing unit. Software programs or routines are preferably applied for determining the required correction of a piston's displacement, and for generating control signals for controlling the piston movement.

BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows a solvent delivery system comprising a solvent delivery line for solvent A and a solvent delivery line for solvent B;

Fig. 2 shows a solvent gradient, whereby the amount of solvent B is linearly increased as a function of time;

Fig. 3 shows a dual piston pump comprising two metering pumps connected in series;

Fig. 4 shows a composite solvent's viscosity as a function of the composite solvent's mixing ratio;

Fig. 5 depicts the time dependence of the composite solvent's pressure when applying a solvent gradient to a separation device;

Fig. 6 shows the time dependence of solvent pressure, column flow, solvent composition and piston displacement for the case of a non-corrected piston movement;

Fig. 7 shows the time dependence of solvent pressure, column flow, solvent composition and piston displacement for the case of a corrected piston movement;

Fig. 8 shows the respective displacement speeds of piston A and piston B as a function of time for the case of a corrected piston movement;

Fig. 9 shows solvent pressure, column flow, solvent composition and piston displacement as a function of time, whereby the piston movement is corrected by means of a correction pulse; and

Fig. 10 shows the respective displacement speeds of piston A and piston B as a function of time, whereby the piston movement is corrected by means of a correction pulse.

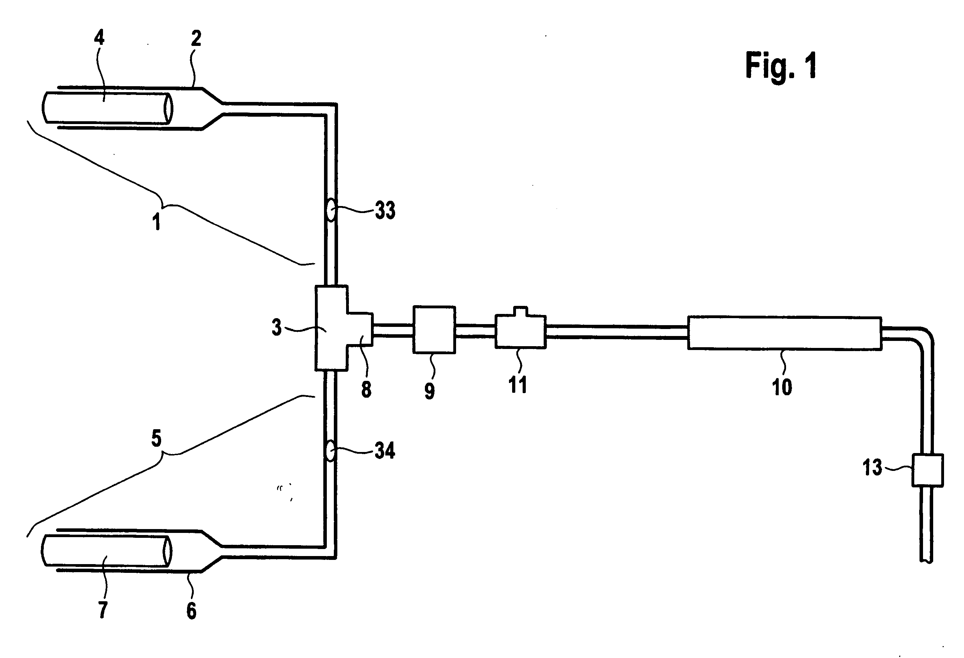

In Fig. 1, a high pressure solvent delivery system is shown. The solvent delivery system comprises a first solvent delivery line 1 with a first metering pump 2. The first solvent delivery line 1 is adapted for supplying a first solvent A to a mixing tee 3, with the flow rate of solvent A being determined by the movement of the metering pump's piston 4. Furthermore, a second solvent delivery line 5 with a second metering pump 6 is connected to the mixing tee 3. The second solvent delivery line 5 is adapted for supplying a second solvent B to the mixing tee 3, with the rate of solvent B being determined by the movement of piston 7.

In the mixing tee 3, the respective volumes of solvent A and solvent B provided by the two solvent delivery lines 1,5 are mixed and at the mixing tee's outlet 8, a composite solvent with a certain percentage of solvent A and a certain percentage of solvent B is provided. A pressure determination unit 9 is located downstream of the mixing tee's outlet 8. The pressure determination unit 9 might e.g. comprise a wire strain gauge or a piezoelectric pressure gauge for determining the composite solvent's pressure.

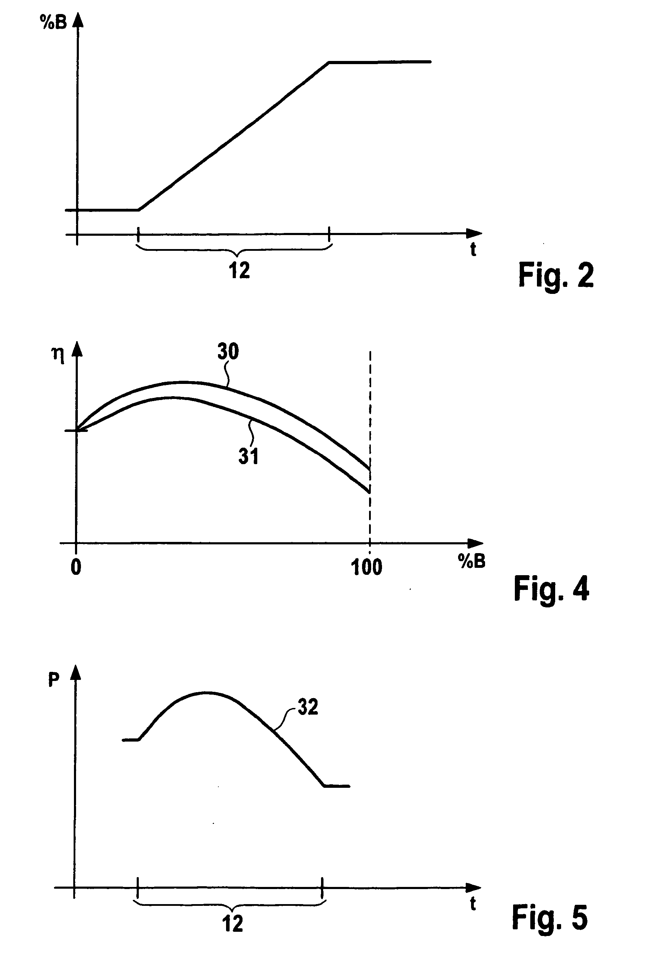

The high pressure solvent delivery system can be used in the field of liquid chromatography, for supplying a solvent gradient to a high pressure liquid chromatography (HPLC) column. However, the solvent delivery system shown in Fig. 1 might as well be used in any other application where a time dependant composition of two or more solvents is needed. In the embodiment shown in Fig. 1, the outlet 8 of the mixing tee 3 is in fluid communication with a liquid chromatography column 10. The flow path further comprises an injector unit 11 located upstream of the separation column 10. The injector unit 11 permits introducing a volume of fluid sample, a so-called "plug", into the separation flow path. When starting sample analysis, the elution strength of the composite solvent is rather low, and as a consequence, most of the sample components are trapped at the separation column's head. Next, a solvent gradient is applied. In Fig. 2, the solvent gradient is depicted as a function of time. Initially, the composite solvent consists entirely of solvent A, which might e.g. be water. During the time interval 12, the percentage of solvent B is continuously augmented. In general, solvent B often is an organic solvent, like e.g. ethanol or acetonitrile. Because of the increasing amount of organic solvent, the elution strength continually increases during the time interval 12, and the various different moieties of the injected sample are consecutively washed to the separation column's outlet, which is connected to a detection unit 13. The detection unit 13 might e.g. be implemented as an optical absorbance detection unit adapted for monitoring absorbance intensity of the fluid. Whenever a band of a certain sample component passes the detection cell, there will be a corresponding peak in the detector's output signal. Peaks may be characterized with respect to their retention time, which is the time at which the center of the band transits the detector, relative to the time of injection. By integrating the area below a peak, the absorption due to a certain sample component is obtained. If the flow rate through the detection unit is kept constant, the obtained peak area will be directly proportional to the concentration of the corresponding sample component. Accordingly, it has always been tried to keep the flow rate in the separation flow path as constant as possible.

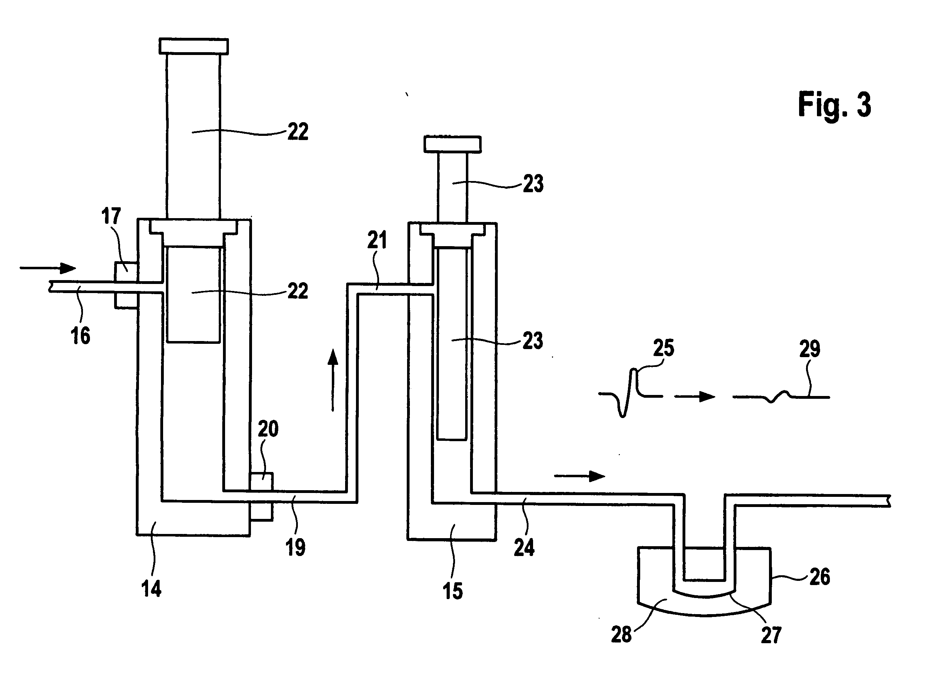

In the solvent supply system of Fig. 1, each of the solvent delivery lines 1, 5 comprises one high pressure pump. However, in order to provide for a constant flow of solvent, an arrangement of two pump heads as shown in Fig. 3 can be used instead of a single metering device. The arrangement shown in Fig. 3 comprises a first pump head 14 and a second pump head 15 that is connected in series with the first pump head 14. The first pump's inlet 16 is equipped with a first check valve 17, and the outlet 19 is equipped with a second check valve 20. The outlet 19 is in fluid communication with the inlet 21 of the second pump. During a first phase of operation, the first pump's piston 22 is moved upwards, whereas the second pump's piston 23 performs a downward stroke. Check valve 17 is opened, check valve 20 is closed, and solvent is aspirated. Due to the downward movement of the second pump's piston 23, a flow of solvent appears at the second pump's outlet 24. During a subsequent second phase of operation, piston 22 is moved downwards, whereas piston 23 performs an upward stroke. Piston 22 displaces about twice the volume of piston 23. For this reason, the upward stroke of piston 23 is overcompensated by the downward stroke of piston 22, and there is a resulting flow of solvent at the outlet 24.

A solvent delivery system suited for high pressure liquid chromatography (HPLC) has to supply a composite solvent at a pressure of more than 100 bar. Whenever the pistons 22, 23 change their direction of movement, there will be a discontinuity 25 of system pressure. In order to dampen discontinuities of this kind, the solvent delivery line further comprises a pulse dampener 26. In the pulse dampener 26, the solvent pressure acts against a membrane 27 that separates the solvent conduit from a fluid reservoir 28. This leads to a significant decrease (29) of the pressure discontinuity.

In Fig. 4, the viscosity of the composite solvent is shown as a function of solvent composition, i.e. of the percentage of solvent B. Curve 30 relates to a mixture of water and methanol (MeOH). Curve 31 relates to a mixture of water and acetonitrile (ACN). For both cases, the viscosity of the composite solvent strongly depends on solvent composition. For small amounts of solvent B, the viscosity is rather low, then it rises, and then it drops again as the percentage of solvent B gets large.

The solvent pressure required for establishing predefined solvent flow through the separation column 10 depends on the viscosity of the composite solvent. In fact, the solvent pressure p at the column's head can be written as:

$$p = \text{flow rate} \times \text{hydraulic flow resistance} = $$
$$= \text{flow rate} \times \text{geometry factor} \times \text{viscosity}$$

Hence, the pressure required for conveying the composite solvent through the separation column is directly proportional to the composite solvent's viscosity.

When supplying a solvent gradient to the separation column 10, the composite solvent's viscosity profile induces a corresponding profile of the solvent pressure measured upstream of the column's inlet. Fig. 5 shows a curve 32 indicating the solvent pressure measured by the pressure determination unit 9 as a function of time when a solvent gradient like the one shown in Fig. 2 is applied. In case of pure water, a pressure of about 270 bar is required for forcing the mobile phase through the stationary phase support of the separation column. With increasing amount of organic solvent, the viscosity of the composite solvent is increased, and accordingly the pressure necessary to maintain the required volumetric flow rate rises up to about 350 bar. When further increasing the amount of organic solvent, the viscosity decreases, and accordingly, the required pressure goes down to about 150 bar.

One of the findings of the present invention is that the solvent pressure's dependence on solvent composition may cause compositional disturbances. In the following, the reason for these disturbances will be explained in more detail. If the pressure detected at the pressure determination unit 9 of Fig. 1 is increased, both the volume of solvent A in the solvent delivery line 1 and the volume of solvent B in the solvent delivery line 5 will be further compressed. In Fig. 1, the volume compression 33 of solvent A and the volume compression 34 of solvent B have been indicated schematically. In the opposite case, if the pressure of the composite solvent drops, both the volume of solvent A in the first solvent delivery line 1 and the volume of solvent B in the solvent delivery line 5 will be subjected to an expansion. The additional impact of solvent compression and solvent expansion in the solvent delivery lines 1,5 implies that the respective piston movements of the metering pumps 2,6 do not solely determine the solvent flow that arrives at the mixing unit 3. In fact, in addition to the piston movements, changes of solvent pressure and corresponding variations of the solvent volumes contained in the solvent delivery lines have to be taken into account.

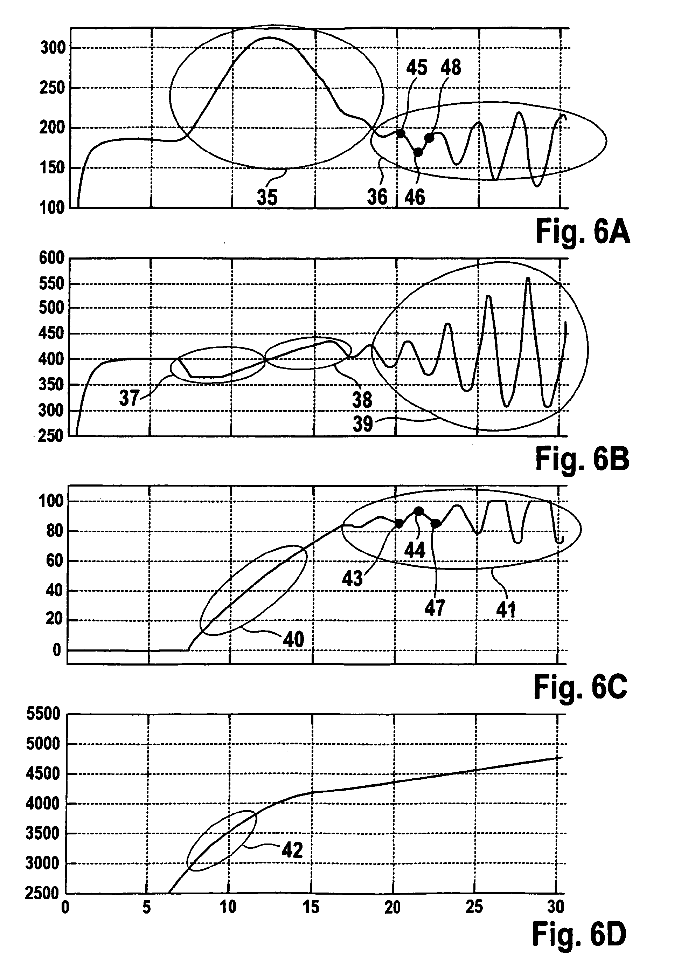

In order to more closely understand the effects due to pressure variations, Figs. 6A to 6D show a simulated behaviour of several different system parameters when applying a high pressure solvent gradient of $H_2O$ and MeOH to a separation column. In order to enhance the effects to become better visible a compressible liquid flow path A is assumed, e.g. with more damping being installed in flow path A. In Fig. 6A, the pressure of the composite solvent is depicted as a function of time. In region 35, the pressure's behaviour agrees pretty well with the pressure profile shown in Fig. 5. However, in region 36, the pressure of the composite solvent starts to oscillate. A similar behaviour is encountered when monitoring the solvent flow through the separation column as a function of time, which is depicted in Fig. 6B. In region 37, the flow through the column decreases, and in region 38, the flow of the composite solvent increases as a function of time. In region 39, oscillations of the column flow are observed.

The oscillating behaviour can be understood in view of Fig. 6C, which shows the delivered percentage of solvent B as a function of time. In region 40, the percentage of solvent B increases almost linearly as a function of time. Then, in region 41, oscillations of the composite solvent's composition are observed.

In Fig. 6D, the corresponding piston position is depicted as a function of time. Initially, in region 42, the slope of the piston's position curve is quite large, which corresponds to a large flow rate of solvent A. For generating a solvent gradient, it is necessary to continuously decrease the flow rate of solvent A while linearly increasing the flow rate of solvent B. In order to provide for a linear decrease of the flow rate of solvent A, the slope of the piston's position is continuously reduced.

In the following, the mechanism of the oscillating behaviour depicted in Fig. 6A, 6B, 6C will be discussed. Let us consider an increase of the amount of solvent B from 85 % (cf. reference sign 43 of Fig. 6C) to 95 % (cf. reference sign 44 of Fig. 6C). As soon as the modified solvent composition has propagated to the separation column's head, solvent pressure will change in accordance with the modified composition's viscosity. Accordingly, a corresponding decrease of the composite solvent's pressure is observed in the time interval between reference sign 45 and reference sign 46 of Fig. 6A. Now, both the volume of solvent A in solvent delivery line 1 and the volume of solvent B in solvent delivery line 5 expand in accordance with this pressure drop. In dependence on the respective compressibilities $\kappa_A$ of solvent A and $\kappa_B$ of solvent B, additional volumes of solvent A and solvent B are set free. These additional volumes affect the composition of the composite solvent: The relative increase of the flow rate of solvent A will be more significant than the relative increase of the flow rate of solvent B, because in region 41, the absolute flow rate of solvent A is much smaller than the flow rate of solvent B. As a result, the percentage of solvent B might e.g. decrease from 95 % to about 87 % (cf. reference sign 47 of Fig. 6C). When the modified composition of the solvent mixture reaches the separation column, a corresponding increase of the composite solvent's pressure is observed (cf. reference sign 48 of Fig. 6A).

In the next iteration, this increase of solvent pressure will lead to a corresponding compression of the volumes of solvent A and solvent B in the solvent delivery lines, which will give rise to a modified solvent composition, etc.

From the above discussion, it is clear that the oscillating behaviour is due to an interplay between solvent composition and solvent pressure, with the period of these oscillations being determined by the composite solvent's propagation delay when travelling from the mixing unit to the separation column.

According to embodiments of the present invention, the piston movement A is modified in a way that also the oscillatory behaviour shown in Fig. 6A, 6B, 6C is avoided. In particular, it is suggested to compensate for a compression or expansion of the solvent volumes contained in the solvent delivery lines, which is due to a variation of solvent pressure, by superposing corresponding corrective displacements on the pistons' movements.

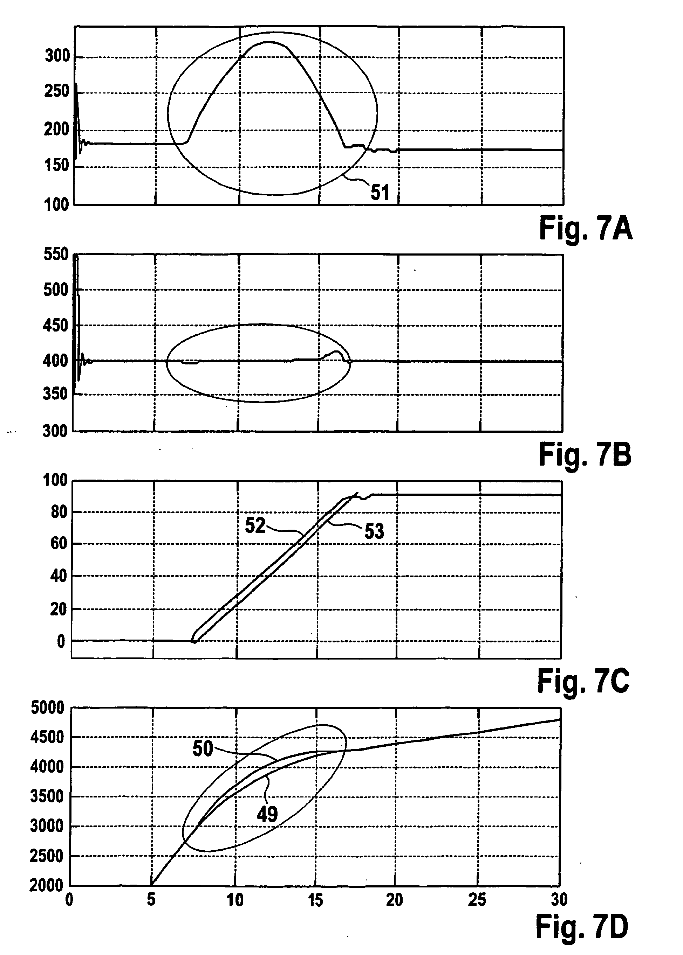

Fig. 7D shows piston position of piston A versus time. From Fig. 7D, it can be seen how the piston movement of piston A is modified. Curve 49 shows the piston movement according to solutions of the prior art, whereas in curve 50, the effects due to pressure variations are taken into account.

When the pressure increases and the solvent volume in the supply flow path is compressed, a corrective movement in the forward direction is superposed on the piston movement, in order to compensate for this compression. When there is a decrease of the composite solvent's pressure, the solvent volume in the supply flow path will expand, and in order to compensate for this expansion, a backward displacement is superposed on the piston movement. Thus, additional solvent quantities pushed into or drawn out of the supply flow paths are compensated for.

The three diagrams in Figs. 7A, 7B, 7C relate to a pressure-corrected piston movement according to curve 50 of Fig. 7D. Fig. 7A depicts system pressure as a function of time when applying a solvent gradient to the separation column. The corrected piston movement does not influence the viscosity profile of the composite solvent, and therefore, in region 51, the pressure curve still corresponds to the pressure curve shown in Fig. 5. However, due to the corrected piston movement, pressure oscillations (cf. region 36 of Fig. 6A) are suppressed.

Fig. 7B shows column flow of the separation column as a function of time. When comparing the column flow of Fig. 7B with the column flow shown in Fig. 6B, it is obvious that the modified piston movement helps to flatten out flow disturbances. Oscillations of column flow, which have been present in region 39 of Fig. 6B, are entirely suppressed.

Fig. 7C depicts the percentage of solvent B as a function of time. Curve 52 is close to a straight line 53, and accordingly, the amount of solvent B increases linearly as a function of time. In contrast to Fig. 6C, no oscillations of the amount of solvent B are observed. After having reached the maximum, the percentage of solvent B remains constant.

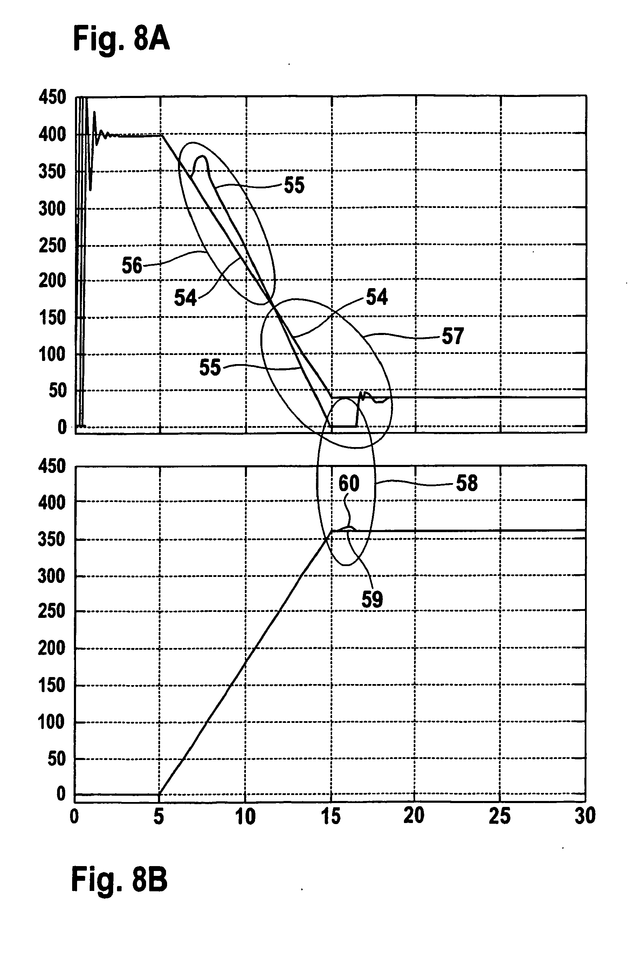

Fig. 8A shows the speed of piston A as a function of time. Curve 54 corresponds to the case that no correction is applied, whereas in curve 55, a corrective movement is superposed on the piston's regular movement. In region 56, the pressure rises as a function of time (cf. Fig. 7A), and the volume of solvent A in the solvent supply flow path is compressed. In order to compensate for this compression of solvent A, a correction in the forward direction is superposed on the piston movement. In region 56, the corrected curve 55 lies above the non-corrected curve 54. After system pressure has reached its maximum, the pressure starts to decrease as a function of time. Region 57 of Fig. 8A is related to this decrease of pressure. The respective volumes of solvent A and solvent B contained in the supply flow paths expand. In order to compensate for this expansion, a correction in the backward direction is superposed on the piston movement. Accordingly, in region 57, the corrected curve 55 lies below the non-corrected curve 54.

In Fig. 8B, the speed of piston B is depicted as a function of time. The time scale of Fig. 8B coincides with the time scale of Fig. 8A. Comparing Fig. 8A and Fig. 8B, it can be seen that most of the flow correction is performed by modifying the speed of piston A. However, if the corrected speed of piston A drops below zero, which is the case in region 58, it will become necessary to additionally modify the speed of piston B. Accordingly, in region 58, the corrected curve 60 indicating the modified speed of piston B deviates from the non-corrected curve 59. Region 58 is the only region in Fig. 8B where the speed of piston B is modified. This is true only for the case that the flow path for solvent A is substantially weaker than the flow path for solvent B, which is true for the assumed damping installed in the flow path for solvent A.

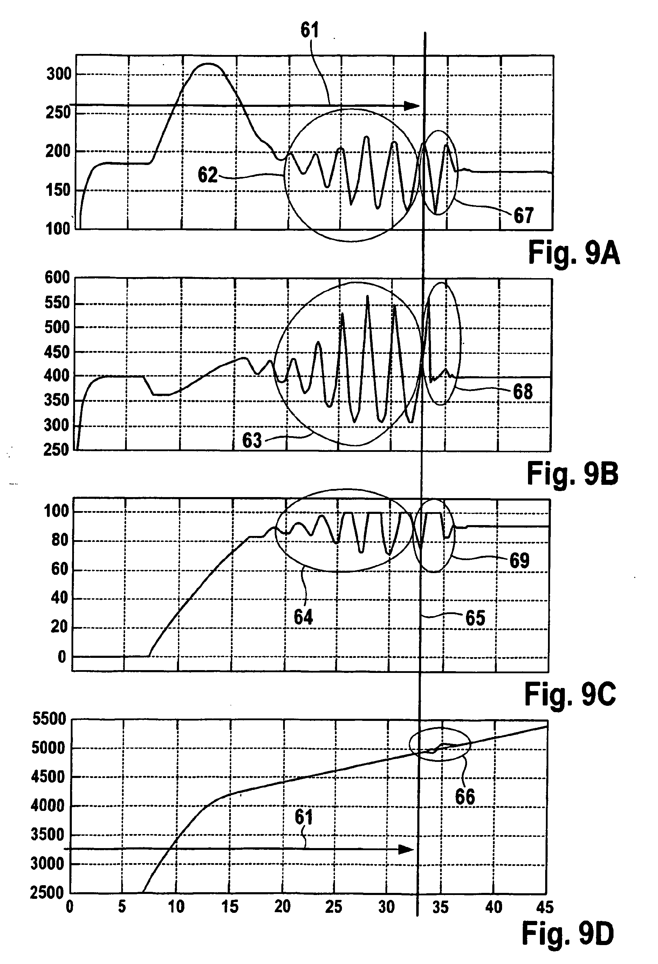

Figs. 9A to 9D relate to an alternative embodiment of the invention. Fig. 9A shows system pressure as a function of time, Fig. 9B depicts the time dependence of column flow, and in Fig. 9C, the percentage of solvent B is sketched as a function of time. In time interval 61, the solvent delivery system is run uncorrected. Accordingly, in regions 62, 63, 64, stable oscillations occur. In these regions, the system behaviour corresponds to the behaviour shown in Fig. 6A, 6B, 6C. Then, at a point of time 65, the correction algorithm is activated, and a corrective displacement is superposed on the piston movement. This can be seen in Fig. 9D, which shows the piston position of the metering device for solvent A as a function of time. In time interval 61, the non-corrected piston movement coincides with the piston movement of Fig. 6D. Starting at the point of time 65, a corrective displacement is superposed on the piston movement. The small wave in region 66 of Fig. 9D indicates this correction. In response to this corrective movement, the oscillatory behaviour is dampened in regions 67, 68, 69, and stability is achieved almost instantaneously.

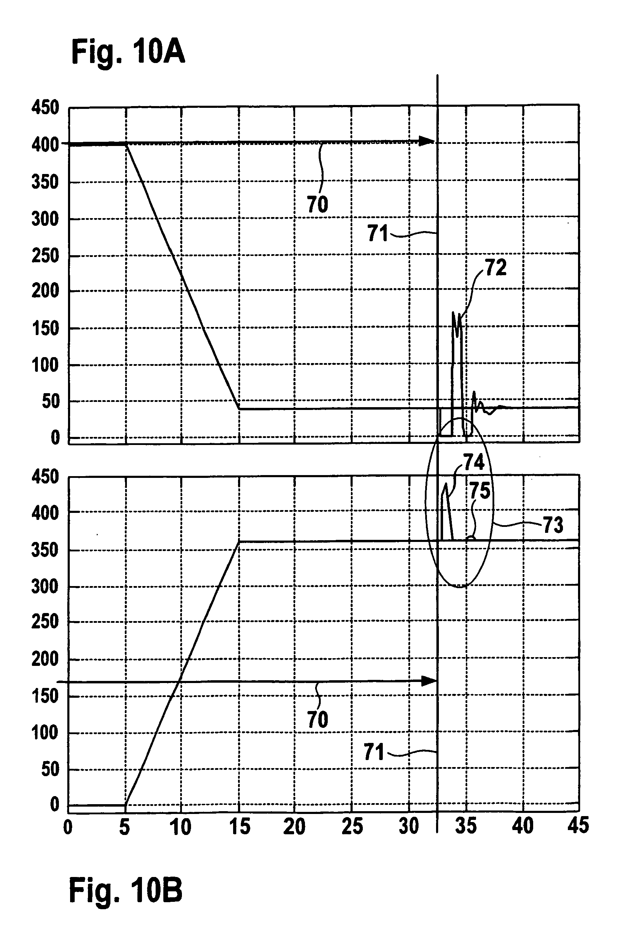

Figs. 10A and 10B relate to the embodiment of Figs. 9A to 9D and indicate the respective speed of piston A and piston B as a function of time. Fig. 10A relates to the speed of piston A. During time interval 70, the speed of piston A is not subjected to any corrections. Then, at a point of time 71, there is a steep change 72 counteracting the oscillatory behaviour. Fig. 10B relates to the speed of piston B. In time interval 70, the speed of piston B is not modified at all. After flow correction is started at the point of time 71, most of the correction is performed by the metering device of the solvent delivery line for solvent A. However, whenever the speed of piston A drops below zero, it will be necessary to modify the speed of piston B. For example, in region 73, there exist corrections 74, 75 superposed on the speed of piston B that correspond to time intervals where the speed of piston A is below zero. The flow corrections shown in Fig. 10A and 10B enforce a stabilization of solvent composition and column flow.

**Claims**

1. A solvent supply system comprising:

   a first supply flow path (1), for supplying a first solvent, comprising a first metering device (2) having a first piston (4) and being adapted for metering the first solvent, a pressure determination unit, and
   a control unit adapted for controlling the first metering device's piston movement in accordance with a first solvent pressure of the first solvent,

wherein a variation of the first solvent pressure gives rise to a corresponding variation of a first solvent volume of the first solvent contained in the first supply flow path (1) or a part thereof,

**characterized in that** the control unit is adapted for compensating for the variation of the first solvent volume by a corresponding corrective movement of the first piston (4) and

the control unit is adapted for compensating for an increase of the first solvent pressure by superposing a corresponding forward displacement on the piston movement of the first piston, and for compensating for a decrease of the first solvent pressure by superposing a corresponding backward displacement on the piston movement of the first piston.

2. The solvent supply system of claim 1, comprising
a pressure determination unit adapted for determining the solvent pressure at an outlet of the first supply flow path.

3. The solvent supply system of claim 1 or 2, comprising
a mixing unit (3), and
a second supply flow path (5) comprising a second metering device (6) having a second piston (7),
wherein the first supply flow path (1) is configured for supplying a first solvent to the mixing unit (3),
the second supply flow path (5) is configured for supplying a second solvent to the mixing unit (3),
the mixing unit (3) is configured for mixing the first and the second solvents and for supplying a composite solvent with a mixing ratio of the first and the second solvents,
the control unit is adapted for compensating for an increase of a second solvent pressure of the second solvent by superposing a corresponding forward displacement on the piston movement of the second piston, and for compensating for a decrease of the second solvent pressure by superposing a corresponding backward displacement on the piston movement of the second piston, and
the control unit is adapted for maintaining the mixing ratio substantially independent of a variation of the first and second solvent pressure of the composite solvent by compensating for the variations of the first solvent volume by the corresponding corrective movements of the first piston and/or by compensating for the variations of the second solvent volume by the corresponding corrective movements of the second piston.

4. The solvent supply system of the preceding claim, wherein
the control unit is adapted for such controlling the piston movements of the first and the second metering devices that the composite solvent is provided at a constant flow rate.

5. The solvent supply system of any one of claims 3-4, wherein
the control unit is adapted for varying the ratio of the first and the second solvent in the composite solvent according to a gradient.

6. The solvent supply system of any one of claims 3-5, wherein
the control unit is adapted for deriving the solvent pressure of the composite solvent from the ratio of the first and the second solvents, which determines the composite solvent's viscosity.

7. The solvent supply system of any one of claims 3-6, wherein the control unit is adapted for deriving the additional piston movement from one or more of the following parameters:

actual pressure of at least one of: the first solvent, the second solvent, the composite solvent;
system elasticity of supply flow path components;
respective compressibilities in the first and the second supply flow path;
actual piston positions of the metering devices, which determine the respective solvent volumes contained in the first and the second supply flow path.

8. The solvent supply system of any one of claims 3-7, wherein
at least one of the first and the second supply flow path further comprises a damping unit.

9. A separation system comprising
a solvent supply system, according to claim 1 or any one of the above claims, adapted for supplying a solvent;
a separation device (10) adapted for separating compounds of a fluid sample, with an outlet of the solvent supply system being connected with an inlet of the separation device.

**10.** A method for supplying a solvent, the method comprising:

(a) providing a first solvent by means of a first metering device (2) that is part of a first supply flow path (1);
(b) monitoring a first solvent pressure of the first solvent, wherein a variation of the first solvent pressure gives rise to a corresponding variation of a first solvent volume of the first solvent contained in the first supply flow path (1) or a part thereof,
(c) controlling a movement of a first piston of the first metering device (2) in accordance with the first solvent pressure, and compensating for the variation of the first solvent volume by a corresponding corrective movement of the piston (4), wherein an increase of the first solvent pressure is compensated by superposing a corresponding forward displacement on the piston movement of the first piston, and a decrease of the first solvent pressure is compensated by superposing a corresponding backward displacement on the piston movement of the first piston.

**11.** The method of the preceding claim, for generating a composite solvent with a time-dependent solvent composition, further comprising:

providing a second solvent by means of a second metering device (6) that is part of a second supply flow path (5);
monitoring a second solvent pressure of the second solvent, wherein a variation of the second solvent pressure gives rise to a corresponding variation of a second solvent volume of the second solvent contained in the second supply flow path (1) or a part thereof,
controlling a movement of a second piston of the second metering device (2) in accordance with the second solvent pressure, and compensating for the variation of the second solvent volume by a corresponding corrective movement of the piston (4), wherein an increase of the second solvent pressure is compensated by superposing a corresponding forward displacement on the piston movement of the second piston, and a decrease of the second solvent pressure is compensated by superposing a corresponding backward displacement on the piston movement of the second piston.
mixing the first and the second solvents and generating the composite solvent with a time-dependent mixing ratio of the first and the second solvents.

**12.** A software program or product, preferably stored on a data carrier, for performing the method of claim 10 or 11, when run on a data processing system such as a computer.

**Patentansprüche**

**1.** Lösemittelzufuhrsystem, das aufweist:

einen ersten Zufuhrströmungspfad (1) zum Zuführen eines ersten Lösemittels, der eine erste Zumesseinheit (2) mit einem ersten Kolben (4) zum Zumessen des ersten Lösemittels, eine Druckermittelungseinheit und eine Steuereinheit zum Steuern der Kolbenbewegung der ersten Zumesseinheit in Abhängigkeit von einem ersten Lösemitteldruck des ersten Lösemittels aufweist,
wobei eine Änderung des ersten Lösemitteldrucks eine erste Änderung eines ersten Lösemittelvolumens des ersten Lösemittels bewirkt, das im ersten Zufuhrströmungspfad (a) oder einem Teil davon enthalten ist,
**dadurch gekennzeichnet, dass** die Steuereinheit zum Kompensieren der Änderung des ersten Lösemittelvolumens durch eine entsprechende Korrekturbewegung des ersten Kolbens (4) dient, und
dass die Steuereinheit zum Kompensieren einer Erhöhung des ersten Lösemitteldrucks durch Überlagern der Kolbenbewegung des ersten Kolbens mit einem entsprechenden Vorwärtshub und zum Kompensieren einer Verringerung des ersten Lösemitteldrucks durch Überlagern der Kolbenbewegung des ersten Kolbens mit einem entsprechenden Rückwärtshub dient.

**2.** Lösemittelzufuhrsystem nach Anspruch 1, das aufweist:

eine Druckermittelungseinheit zum Ermitteln eines Lösemitteldrucks an einem Ablauf des ersten Zufuhrströmungspfades.

**3.** Lösemittelzufuhrsystem nach Anspruch 1 oder 2, das aufweist:

eine Mischeinheit (3) und

einen zweiten Zufuhrströmungspfad (5), der eine zweite Zumesseinheit (6) mit einem zweiten Kolben (7) aufweist,

wobei der erste Zufuhrströmungspfad (1) zum Zuführen eines ersten Lösemittels zur Mischeinheit (3) dient, der zweite Zufuhrströmungspfad (5) zum Zuführen eines zweiten Lösemittels zur Mischeinheit (3) dient, die Mischeinheit (3) zum Mischen des ersten und des zweiten Lösemittels und zum Zuführen eines Lösemittelgemischs mit einem Mischungsverhältnis des ersten und des zweiten Lösemittels dient,

die Steuereinheit zum Kompensieren einer Erhöhung eines zweiten Lösemitteldrucks des zweiten Lösemittels durch Überlagern der Kolbenbewegung des zweiten Kolbens mit einem entsprechenden Vorwärtshub und zum Kompensieren einer Verringerung des zweiten Lösemitteldrucks durch Überlagern der Kolbenbewegung des zweiten Kolbens mit einem entsprechenden Rückwärtshub dient, und

die Steuereinheit dazu dient, das Mischungsverhältnis im Wesentlichen unabhängig von einer Änderung des ersten und zweiten Lösemitteldrucks des Lösemittelgemischs durch Kompensieren der Änderungen des ersten Lösemittelvolumens durch entsprechende Korrekturbewegungen des ersten Kolbens und/oder durch Kompensieren der Änderungen des zweiten Lösemittelvolumens durch entsprechende Korrekturbewegungen des zweiten Kolbens konstant zu halten.

4.  Lösemittelzufuhrsystem nach dem vorhergehenden Anspruch, wobei die Steuereinheit dazu dient, die Kolbenbewegungen der ersten und der zweiten Zumesseinheit so zu steuern, dass das Lösemittelgemisch mit einer konstanten Strömungsgeschwindigkeit zugeführt wird.

5.  Lösemittelzufuhrsystem nach einem der Ansprüche 3 bis 4, wobei
die Steuereinheit dazu dient, das Mischungsverhältnis des ersten und des zweiten Lösemittels im Lösemittelgemisch entsprechend einem Gradienten zu ändern.

6.  Lösemittelzufuhrsystem nach einem der Ansprüche 3 bis 5, wobei
die Steuereinheit dazu dient, den Lösemitteldruck des Lösemittelgemischs aus dem Mischungsverhältnis des ersten und des zweiten Lösemittels abzuleiten, das für die Viskosität des Lösemittelgemischs bestimmend ist.

7.  Lösemittelzufuhrsystem nach einem der Ansprüche 3 bis 6, wobei die Steuereinheit dazu dient, die zusätzliche Kolbenbewegung von einem oder mehreren der folgenden Parameter abzuleiten:

herrschender Druck des des ersten Lösemittels und/oder des zweiten Lösemittels und/oder des Lösemittelgemischs;
Systemelastizität der Komponenten des Zufuhrströmungspfades;
individuelle Kompressibilitäten im ersten und im zweiten Zufuhrströmungspfad;
aktuelle Kolbenstellungen der Zumesseinheiten, die für die im ersten und im zweiten Zufuhrströmungspfad jeweils enthaltenen Lösemittelvolumina bestimmend sind.

8.  Lösemittelzufuhrsystem nach einem der Ansprüche 3 bis 7, wobei der erste und/oder der zweite Zufuhrströmungspfad ferner eine Dämpfungseinheit aufweist.

9.  Trennsystem, das aufweist:

ein Lösemittelzufuhrsystem nach Anspruch 1 oder einem der vorhergehenden Ansprüche zum Zuführen eines Lösemittels;
eine Trenneinheit (10) zum Trennen der Verbindungen einer Fluidprobe, wobei ein Ablauf des Lösemittelzufuhrsystems mit einem Zulauf der Trenneinheit verbunden ist.

10. Verfahren zum Zuführen eines Lösemittels, wobei das Verfahren folgende Schritte aufweist:

(a) Bereitstellen eines ersten Lösemittels mittels einer ersten Zumesseinheit (2), die Teil eines ersten Zufuhrströmungspfades (1) ist;
(b) Überwachen eines ersten Lösemitteldrucks des ersten Lösemittels, wobei eine Änderung des ersten Lösemitteldrucks eine entsprechende Änderung eines ersten Lösemittelvolumens des ersten Lösemittels bewirkt, das im ersten Zufuhrströmungspfad (1) oder einem Teil davon enthalten ist,
(c) Steuern einer Bewegung eines ersten Kolbens der ersten Zumesseinheit (2) in Abhängigkeit vom ersten Lösemitteldruck und Kompensieren der Änderung des ersten Lösemittelvolumens durch eine entsprechende Korrekturbewegung des Kolbens (4), wobei eine Erhöhung des ersten Lösemitteldrucks durch Überlagern der

**EP 1 707 958 B1**

Kolbenbewegung des ersten Kolbens mit einem entsprechenden Vorwärtshub und eine Verringerung des ersten Lösemitteldrucks durch Überlagern der Kolbenbewegung des ersten Kolbens mit einem entsprechenden Rückwärtshub kompensiert wird.

11. Verfahren nach dem vorhergehenden Anspruch zum Erzeugen eines Lösemittelgemischs mit einer zeitabhängigen Zusammensetzung, wobei das Verfahren ferner den folgenden Schritt aufweist:

Bereitstellen eines zweiten Lösemittels mittels einer zweiten Zumesseinheit (6), die Teil eines zweiten Zufuhrströmungspfades (5) ist;

Überwachen eines zweiten Lösemitteldrucks des zweiten Lösemittels, wobei eine Änderung des zweiten Lösemitteldrucks eine entsprechende Änderung eines zweiten Lösemittelvolumens des zweiten Lösemittels bewirkt, das im zweiten Zufuhrströmungspfad (1) oder einem Teil davon enthalten ist,

Steuern einer Bewegung eines zweiten Kolbens der zweiten Zumesseinheit (2) in Abhängigkeit vom zweiten Lösemitteldruck und Kompensieren der Änderung des zweiten Lösemittelvolumens durch eine entsprechende Korrekturbewegung des Kolbens (4), wobei eine Erhöhung des zweiten Lösemitteldrucks durch Überlagern der Kolbenbewegung des zweiten Kolbens mit einem entsprechenden Vorwärtshub und eine Verringerung des zweiten Lösemitteldrucks durch Überlagern der Kolbenbewegung des zweiten Kolbens mit einem entsprechenden Rückwärtshub kompensiert wird.

Mischen des ersten und des zweiten Lösemittels und Erzeugen des Lösemittelgemischs mit einem zeitabhängigen Mischungsverhältnis des ersten und des zweiten Lösemittels.

12. Softwareprogramm oder -produkt, das vorzugsweise auf einem Datenträger gespeichert ist, zum Ausführen des Verfahrens nach Anspruch 10 oder 11, wenn es auf einem Datenverarbeitungssystem wie zum Beispiel einem Computer ausgeführt wird.

**Revendications**

1. Système d'alimentation en solvant comprenant :

un premier circuit d'alimentation (1), pour fournir un premier solvant, comprenant un premier dispositif de dosage (2) comportant un premier piston (4) et à même de doser le premier solvant, une unité de détermination de pression, et

une unité de commande à même de commander le mouvement du piston du premier dispositif de dosage en fonction d'une pression de premier solvant du premier solvant,

dans lequel une variation de la pression de premier solvant donne lieu à une variation correspondante d'un volume de premier solvant du premier solvant contenu dans le premier circuit d'alimentation (1) ou une partie de celui-ci,

**caractérisé en ce que** l'unité de commande est à même de compenser la variation du volume de premier solvant par un mouvement correctif correspondant du premier piston (4), et

l'unité de commande est à même de compenser une augmentation de la pression de premier solvant en superposant un déplacement vers l'avant correspondant sur le mouvement de piston du premier piston, et de compenser une diminution de la pression de premier solvant en superposant un déplacement vers l'arrière correspondant sur le mouvement de piston du premier piston.

2. Système d'alimentation en solvant suivant la revendication 1, comprenant
une unité de détermination de pression à même de déterminer la pression de solvant à un orifice de sortie du premier circuit d'alimentation.

3. Système d'alimentation en solvant suivant la revendication 1 ou 2, comprenant une unité de mélange (3), et
un deuxième circuit d'alimentation (5) comprenant un deuxième dispositif de dosage (6) comportant un deuxième piston (7),
dans lequel le premier circuit d'alimentation (1) est configuré pour fournir un premier solvant à l'unité de mélange (3),
le deuxième circuit d'alimentation (5) est configuré pour fournir un deuxième solvant à l'unité de mélange (3),
l'unité de mélange (3) est configurée pour mélanger le premier solvant et le deuxième solvant et pour fournir un solvant composite avec un rapport de mélange du premier solvant et du deuxième solvant,
l'unité de commande est à même de compenser une augmentation d'une pression de deuxième solvant du deuxième solvant en superposant un déplacement vers l'avant correspondant sur le mouvement de piston du deuxième piston, et de compenser une diminution de la pression de deuxième solvant en superposant un déplacement vers l'arrière correspondant sur le mouvement de piston du deuxième piston, et

l'unité de commande est à même de maintenir le rapport de mélange en grande partie indépendant d'une variation de la pression de premier solvant et de deuxième solvant du solvant composite en compensant les variations du volume de premier solvant par les mouvements correctifs correspondants du premier piston et/ou en compensant les variations du volume de deuxième solvant par les mouvements correctifs correspondants du deuxième piston.

**4.** Système d'alimentation en solvant suivant la revendication précédente, dans lequel
l'unité de commande est à même de commander les mouvements de piston du premier dispositif et du deuxième dispositif de dosage de manière à ce que le solvant composite soit fourni à un débit constant.

**5.** Système d'alimentation en solvant suivant l'une quelconque des revendications 3 et 4, dans lequel
l'unité de commande est à même de varier selon un gradient le rapport du premier solvant et du deuxième solvant dans le solvant composite.

**6.** Système d'alimentation en solvant suivant l'une quelconque des revendications 3 à 5, dans lequel
l'unité de commande est à même de dériver la pression de solvant du solvant composite du rapport du premier solvant et du deuxième solvant, qui détermine la viscosité du solvant composite.

**7.** Système d'alimentation en solvant suivant l'une quelconque des revendications 3 à 6, dans lequel l'unité de commande est à même de dériver le mouvement de piston supplémentaire d'un ou de plusieurs des paramètres suivants :

la pression réelle d'au moins un des éléments suivants : le premier solvant, le deuxième solvant, le solvant composite ;
l'élasticité système des composants du circuit d'alimentation ;
les compressibilités respectives dans le premier circuit et le deuxième circuit d'alimentation ;
les positions de piston réelles des dispositifs de dosage, qui déterminent les volumes de solvant respectifs contenus dans le premier circuit et le deuxième circuit d'alimentation.

**8.** Système d'alimentation en solvant suivant l'une quelconque des revendications 3 à 7, dans lequel
au moins un circuit parmi le premier circuit et le deuxième circuit d'alimentation comprend en outre une unité d'amortissement.

**9.** Système de séparation comprenant
un système d'alimentation en solvant, suivant la revendication 1 ou l'une quelconque des revendications précédentes, à même de fournir un solvant ;
un dispositif de séparation (10) à même de séparer des composés d'un échantillon de fluide, un orifice de sortie du système d'alimentation en solvant étant raccordé à un orifice d'admission du dispositif de séparation.

**10.** Procédé pour fournir un solvant, le procédé comprenant :

(a) la fourniture d'un premier solvant au moyen d'un premier dispositif de dosage (2) qui fait partie d'un premier circuit d'alimentation (1) ;
(b) le contrôle d'une pression de premier solvant du premier solvant, dans lequel une variation de la pression de premier solvant donne lieu à une variation correspondante d'un volume de premier solvant du premier solvant contenu dans le premier circuit d'alimentation (1) ou une partie de celui-ci,
(c) la commande d'un mouvement d'un premier piston du premier dispositif de dosage (2) en fonction de la pression de premier solvant, et la compensation de la variation du volume de premier solvant par un mouvement correctif correspondant du piston (4), dans lequel une augmentation de la pression de premier solvant est compensée en superposant un déplacement vers l'avant correspondant sur le mouvement de piston du premier piston, et une diminution de la pression de premier solvant est compensée en superposant un déplacement vers l'arrière correspondant sur le mouvement de piston du premier piston.

**11.** Procédé suivant la revendication précédente, pour générer un solvant composite avec une composition de solvant liée au temps, comprenant en outre :

la fourniture d'un deuxième solvant au moyen d'un deuxième dispositif de dosage (6) qui fait partie d'un deuxième circuit d'alimentation (5) ;

le contrôle d'une pression de deuxième solvant du deuxième solvant, dans lequel une variation de la pression de deuxième solvant donne lieu à une variation correspondante d'un volume de deuxième solvant du deuxième solvant contenu dans le deuxième circuit d'alimentation (1) ou une partie de celui-ci,

la commande d'un mouvement d'un deuxième piston du deuxième dispositif de dosage (2) en fonction de la pression de deuxième solvant, et la compensation de la variation du volume de deuxième solvant par un mouvement correctif correspondant du piston (4), dans lequel une augmentation de la pression de deuxième solvant est compensée en superposant un déplacement vers l'avant correspondant sur le mouvement de piston du deuxième piston, et une diminution de la pression de deuxième solvant est compensée en superposant un déplacement vers l'arrière correspondant sur le mouvement de piston du deuxième piston,

le mélange du premier solvant et du deuxième solvant et la génération du solvant composite avec un rapport de mélange lié au temps du premier solvant et du deuxième solvant.

12. Programme ou produit logiciel, de préférence stocké sur un support de données, pour exécuter le procédé suivant la revendication 10 ou 11 lorsqu'il est exécuté sur un système de traitement de données comme un ordinateur.

**Fig. 1**

EP 1 707 958 B1

Fig. 2

Fig. 4

Fig. 5

**Fig. 3**

EP 1 707 958 B1

**Fig. 6A**

**Fig. 6B**

**Fig. 6C**

**Fig. 6D**

**Fig. 7A**

**Fig. 7B**

**Fig. 7C**

**Fig. 7D**

# Fig. 8A

# Fig. 8B

Fig. 9A

Fig. 9B

Fig. 9C

Fig. 9D

Fig. 10A

Fig. 10B

**EP 1 707 958 B1**

## REFERENCES CITED IN THE DESCRIPTION

**Patent documents cited in the description**

- US 20040108273 A1
- US 4225290 A

- EP 0309596 A1